# FASCICULE DE BREVET EUROPEEN

(11) **EP 3 421 307 B1**
(45) Date de publication et mention de la délivrance du brevet: **21.10.2020**
(21) Numéro de dépôt: 18178744.1
(22) Date de dépôt: 20.06.2018
(51) Int. Cl.: B60S 1/52

(54) **SYSTÈME D'ESSUYAGE ET DE LAVAGE PILOTÉ D'UNE VITRE DE VÉHICULE, ESSUIE-GLACE, BALAI D'ESSUIE-GLACE ET PROCÉDÉ D'ÉQUIPEMENT D'UN VÉHICULE**
GESTEUERTES WISCH- UND REINIGUNGSSYSTEM EINER FAHRZEUGSCHEIBE, SCHEIBENWISCHER, SCHEIBENWISCHERARM UND AUSRÜSTUNGSVERFAHREN EINES FAHRZEUGS
SYSTEM FOR CONTROLLED WIPING AND WASHING OF A VEHICLE WINDOW, WINDSCREEN WIPER, WIPER BLADE AND METHOD FOR EQUIPPING A VEHICLE

(30) Priorité: 29.06.2017 FR 1756015
(43) Date de publication de la demande: 02.01.2019
(73) Titulaire: Valeo Systèmes d'Essuyage, 78322 Le Mesnil Saint Denis (FR)
(72) Inventeur: MOULEYRE, Guillaume, 63500 ISSOIRE (FR); TERRASSE, William, 63500 ISSOIRE (FR)
(74) Mandataire: Valeo Vision

(56) Documents cités:
- EP-A1- 3 002 169
- EP-A2- 1 614 594
- FR-A1- 2 916 716

## Description

### DOMAINE TECHNIQUE DE L'INVENTION

L'invention concerne un système d'essuyage d'une vitre de véhicule automobile comportant un balai d'essuie-glace et un dispositif de projection d'un liquide sur la surface extérieure de la vitre.

L'invention propose aussi un procédé de modification de l'équipement d'un véhicule automobile muni d'un système d'essuyage et de lavage.

### ARRIERE PLAN TECHNIQUE DE L'INVENTION

On connait du document EP 1 614 594 A2, un objet selon le préambule de la revendication 1.

Il est souhaitable de pouvoir piloter l'arrosage de la surface extérieure d'une vitre à essuyer, et notamment d'un pare-brise de telle manière que du liquide, par exemple du liquide de lavage, ne soit projeté que durant la phase aller montante d'un balai d'essuie-glace qui est agencé pour réaliser l'essuyage de la zone du pare-brise sur laquelle est projeté le liquide, et ceci notamment afin de ne pas projeter de liquide détériorant la visibilité au cours de la phase recours descendante.

L'invention a pour but de proposer une solution fondée sur la détection de l'inversion du sens de balayage qui puisse notamment être mise en œuvre pour équiper un véhicule avec des balais équipés de dispositifs de projection de liquide en remplacement de balais traditionnels.

### BREF RESUME DE L'INVENTION

L'invention propose un système d'essuyage d'une vitre de véhicule comprenant :
- au moins un balai d'essuie-glace apte à être entraîné par un bras d'entraînement du système d'essuyage selon des mouvements de balayage alterné, d'au moins une portion de la surface extérieure d'une vitre à essuyer, entre deux positions d'inversion du sens de balayage ;
- un dispositif de projection d'un liquide sur la surface extérieure ;
- une pompe d'alimentation en liquide du dispositif de projection ;
- un circuit de pilotage de l'alimentation du dispositif de projection par la pompe en fonction du sens de balayage,
caractérisé en ce qu'il comporte un capteur d'accélération de l'essuie-glace qui est porté par le bras d'entraînement ou par le balai d'essuie-glace et qui est relié au circuit de pilotage afin de fournir au circuit de pilotage des signaux représentatifs de la valeur de l'accélération du bras d'entraînement ou du balai d'essuie-glace de l'essuie-glace lors des mouvements de balayage alterné.

Selon d'autres caractéristiques du système d'essuyage :
- le circuit de pilotage comporte des moyens d'analyse des signaux fournis par le capteur d'accélération pour détecter l'inversion du sens de balayage de l'essuie-glace ;
- l'essuie-glace comporte un balai d'essuie-glace et un bras d'entraînement en balayage alterné du balai d'essuie-glace, et le capteur d'accélération est porté par le balai d'essuie-glace ou par le bras d'entraînement ;
- le dispositif de projection est configuré pour projeter du liquide le long d'une face latérale du balai ;
- le dispositif de projection est porté par le balai d'essuie-glace ou par le bras d'entraînement ;
- le circuit de pilotage est porté par le balai d'essuie-glace ou par le bras d'entraînement, et le dispositif de projection est configuré pour asperger le pare-brise le long d'une face latérale du balai ;
- la pompe d'alimentation est pilotée par le circuit de pilotage ;
- le système d'essuyage comporte un relais de commande de l'alimentation en énergie électrique d'un moteur d'entraînement de la pompe d'alimentation qui est relié au circuit de pilotage.

L'invention propose aussi un essuie-glace d'une vitre de véhicule automobile,
caractérisé en ce qu'il porte :
- un capteur d'accélération de l'essuie-glace ;
- un circuit de pilotage de l'alimentation en liquide d'un dispositif de projection de liquide sur la vitre,
et en ce que le capteur d'accélération est relié au circuit de pilotage.

Selon d'autres caractéristiques de l'essuie-glace :
- il comporte un balai d'essuie-glace et un bras d'entraînement en balayage alterné du balai d'essuie-glace, et le capteur d'accélération et le circuit de pilotage sont portés par le balai d'essuie-glace ;
- le dispositif d'aspersion est porté par le balai d'essuie-glace.

L'invention propose encore un balai d'essuie-glace d'une vitre de véhicule automobile,
caractérisé en ce qu'il porte :
- un capteur d'accélération de l'essuie-glace ;
- un circuit de pilotage de l'alimentation en liquide d'un dispositif de projection de liquide sur la vitre,
et en ce que le capteur d'accélération est relié au circuit de pilotage.

Le dispositif de projection est par exemple porté par le balai d'essuie-glace.

L'invention propose encore un procédé de modification de l'équipement d'un véhicule automobile muni d'un système d'essuyage d'une vitre du véhicule comprenant :
- au moins un bras d'entraînement d'un balai d'essuie-glace selon des mouvements de balayage alterné, d'au moins une portion de la surface extérieure d'une vitre du véhicule, entre deux positions d'inversion du sens de balayage ;
- un dispositif de projection d'un liquide sur la surface extérieure ;
- une pompe d'alimentation en liquide du dispositif de projection ;
caractérisé en ce qu'il consiste :
-- à équiper ledit bras d'entraînement avec un balai d'essuie-glace comportant une pluralité d'orifices de projection du liquide et à raccorder ce balai d'essuie-glace à la pompe d'alimentation ;
-- à équiper le bras d'entraînement ou le balai d'essuie-glace avec un capteur d'accélération ;
-- à équiper le véhicule avec un circuit de pilotage de l'alimentation du dispositif de projection par la pompe en fonction du sens de balayage, et à relier le circuit de pilotage au capteur d'accélération qui fournit au circuit de pilotage des signaux représentatifs de la valeur de l'accélération du bras d'entraînement ou du balai d'essuie-glace de l'essuie-glace lors des mouvements de balayage alterné.

Selon d'autres caractéristiques du procédé :
- il consiste à équiper le véhicule avec un relais de commande de l'alimentation en énergie électrique d'un moteur d'entraînement de la pompe d'alimentation, et à relier ce relais au circuit de pilotage ;
- il consiste à installer le circuit de pilotage sur le bras d'entraînement ou le balai d'essuie-glace ;
- le circuit de pilotage est intégré à un microcontrôleur.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une représentation schématique d'une partie d'un système d'essuyage dans lequel les balais d'essuie-glace sont en position basse de repos ;
- la figure 2 est une représentation similaire à celle de la figure 1, montrant les balais d'essuie-glace pendant une phase aller montante d'essuyage ;
- la figure 3 est une représentation schématique des éléments illustrés à la figure 1 en association avec des composants complémentaires pour l'entraînement des essuie-glaces et la projection de liquide de lave-glace ;
- la figure 4 est une représentation similaire à celle de la figure 3 illustrant un système d'essuyage mettant en œuvre les enseignements de l'invention ;
- la figure 5 est une représentation similaire à celle de la figure 4 illustrant une autre conception d'un système d'essuie-glace ;
- la figure 6 est une représentation similaire à celle de la figure 5 illustrant le système d'essuyage modifié selon l'invention ;
- les figures 7 et 8 sont deux diagrammes illustrant respectivement la variation de l'accélération et de la vitesse d'un balai d'essuie-glace en fonction de sa position angulaire lors d'un cycle de balayage aller-retour.

### DESCRIPTION DETAILLEE DES FIGURES

Dans la suite de la description, des éléments présentant une structure identique ou des fonctions analogues seront désignés par des mêmes références.

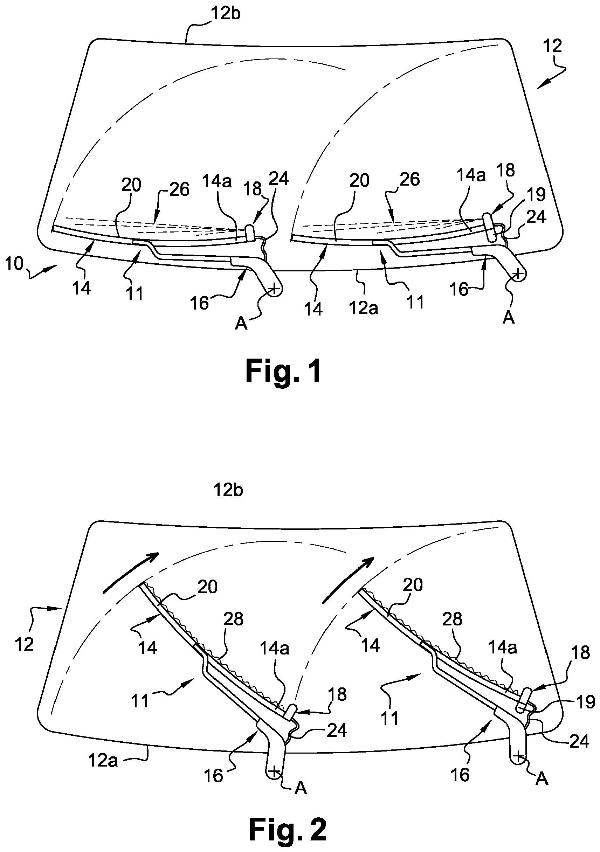

On a représenté de manière schématique aux figures 1 et 2 une conception générale connue d'un système d'essuyage 10 pour une vitre de véhicule automobile, par exemple pour la surface extérieure d'un pare-brise 12 du véhicule.

Le système d'essuyage 10, aussi appelé système d'essuie-glace, comporte deux essuie-glace 11 comportant chacun un balai d'essuie-glace 14, qui sont mobiles en balayage par rapport au pare-brise 12, de manière telle que les balais d'essuie-glace 14 essuient deux portions de la surface extérieure du pare-brise 12 qui peuvent être distinctes, ou se chevaucher partiellement.

Chaque balai d'essuie-glace 14 est ici apte à effectuer des mouvements de balayage alterné.

Dans la description qui va suivre, on fera référence à un seul essuie-glace 11 et un seul balai d'essuie-glace 14, et il sera compris que cette description s'applique également à l'autre essuie-glace 11.

Le balai d'essuie-glace 14 est par exemple un balai d'essuie-glace de faible hauteur appelé balai d'essuie-glace "Flat blade" qui comporte une monture supérieure de support 20 portant une lame inférieure d'essuyage qui est plaquée contre la surface extérieure du pare-brise 12 et qui réalise l'essuyage, notamment d'eau présente sur la surface extérieure, lorsque le balai d'essuie-glace 14 est entraîné en des mouvements de balayage.

Dans le cas présent, le balai d'essuie-glace 14 est monté mobile en balayage alterné, en pivotement alterné, autour d'un axe A d'orientation globalement orthogonale au plan de la surface extérieure à essuyer, entre une position basse de repos représentée à la figure 1, dans laquelle le balai d'essuie-glace 14 est sensiblement parallèle à un bord 12a d'extrémité transversale inférieure du pare-brise 12, et une position haute extrême de balayage dans laquelle le balai d'essuie-glace 14 s'étend en travers du pare-brise 12.

Le balai d'essuie-glace 14 est entraîné en pivotement autour de l'axe A par un bras d'entraînement 16, aussi appelé bras d'essuie-glace, qui est monté pivotant par rapport à un élément de structure du véhicule (non représenté) autour de l'axe A.

Lors de son mouvement de balayage alterné en deux phases, le balai d'essuie-glace 14 effectue une première phase « aller » ou « montante » au cours de laquelle le balai d'essuie-glace 14 se déplace depuis sa position basse de repos vers sa position haute extrême, puis une deuxième phase de « retour » ou phase descendante, au cours de laquelle le balai d'essuie-glace 14 se déplace dans le sens inverse depuis sa position haute extrême vers sa position basse de repos.

Chacune de ces deux positions basse de repos et haute extrême est ainsi une position d'inversion du sens de balayage.

Le système d'essuyage a été présenté ci-dessus comme correspondant à un système dans lequel les deux balais d'essuie-glace 14 effectuent un balayage alterné du panneau vitré.

Un système d'essuyage peut aussi correspondre à un système dans lequel les balais d'essuie-glace effectuent un balayage non alterné de la surface extérieure de la vitre, ou encore dans lequel les balais d'essuie-glace effectuent un balayage linéaire de cette surface. En conséquence, il faut comprendre que la position de repos et la position extrême du balai d'essuie-glace peuvent varier en fonction du système d'essuyage choisi.

Le système d'essuyage 10 comporte encore au moins une buse 18 de projection d'un liquide de nettoyage permettant de compléter l'essuyage par le balai d'essuie-glace 14.

La buse 18 est ici portée par balai d'essuie-glace 14.

Une canalisation, ou conduit hydraulique, 24 réalise le raccordement de la buse de projection 18 à un dispositif d'alimentation en liquide de nettoyage non représenté aux figures 1 et 2.

A titre d'exemple non limitatif, la buse 18 est portée par le balai d'essuie-glace 14 et elle est ici située à une extrémité 14a du balai d'essuie-glace 14, qui est située la plus proche de l'axe A de pivotement.

La buse 18 est réalisée et agencée de manière qu'elle projette un liquide sous la forme d'un jet 26 orienté globalement parallèlement au balai d'essuie-glace 14.

De plus, le jet projeté 26 est projeté le long de la face, ou côté, latérale « amont » du balai d'essuie-glace, c'est-à-dire la face latérale qui est orientée vers un bord supérieur 12b du pare-brise 12 lorsque le balai d'essuie-glace 14 est en position basse de repos (Voir figure 1).

La buse 18 est par exemple orientée par rapport au balai d'essuie-glace 14, de manière que le jet 26 de liquide de nettoyage est projeté directement le long de la lame d'essuyage.

Il s'agit de la face latérale de la lame qui est orientée vers la position extrême de balayage du balai d'essuie-glace 14, lorsque le balai d'essuie-glace 14 effectue la première phase aller de son mouvement de balayage.

Un procédé de commande d'un tel système d'essuyage 10, vise à réaliser un cycle d'essuyage et de lavage qui comporte plusieurs étapes successives de balayage et de projection de liquide de lavage.

Chaque étape du cycle consiste en un aller-retour du balai d'essuie-glace 14 et comporte ainsi une première phase aller et une deuxième phase retour du balai d'essuie-glace 14, telles que définies précédemment.

Une étape de projection de liquide consiste à projeter le liquide par la buse 18. Le jet de liquide 26 est formé pendant une durée prédéterminée, de manière à projeter une certaine quantité de liquide le long de la lame d'essuyage du balai d'essuie-glace 14.

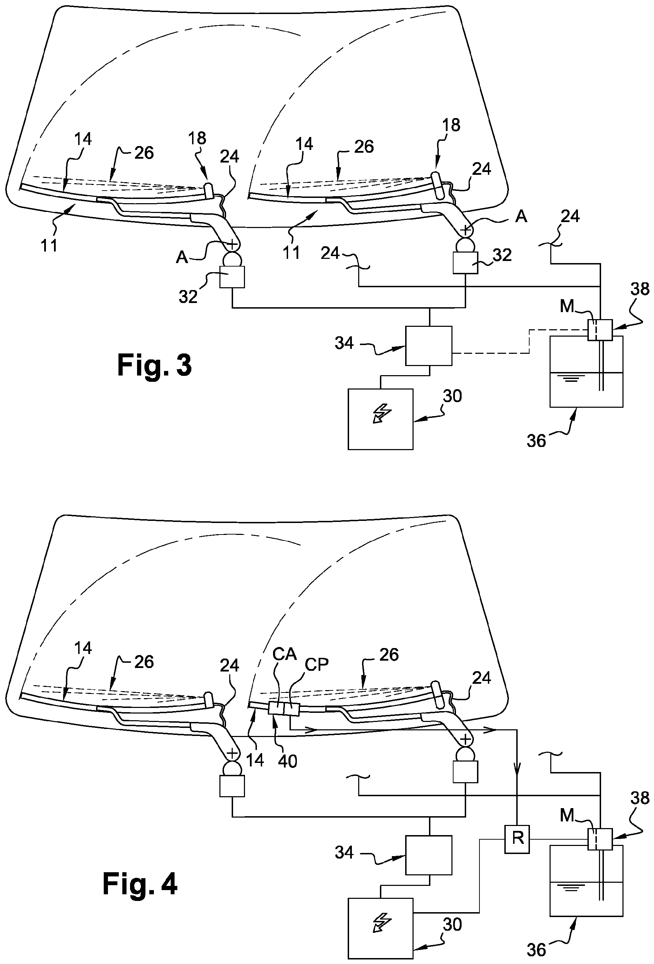

On a représenté à la figure 3, les composants et éléments du système d'essuyage 10 illustré à la figure 1 en association avec des éléments et composants supplémentaires pour l'entrainement motorisé des balais d'essuie-glace 14, et l'alimentation en liquide de lavage sous pression des canalisations 24 reliées aux buse de projection 18

On a notamment représenté une source 30 d'alimentation électrique qui est par exemple une batterie d'accumulateurs du véhicule.

Associé à chaque bras d'entraînement 16, on a représenté de manière schématique un moteur électrique 32 d'entraînement en balayage alterné dont l'alimentation et la commande sont assurées par un circuit électronique de commande 34.

En variante, il est possible de prévoir un seul moteur d'entrainement 32 commun aux deux essuie-glaces 11 et qui est relié à l'un et/ou aux deux bras d'entraînement 16 par exemple par une timonerie.

On a représenté un réservoir 36 de liquide de lave-glace dans lequel puise une pompe électrique 38, dite pompe de lave-glace.

L'alimentation en courant électrique du moteur électrique M d'entraînement de la pompe de lave-glace 38 et son pilotage sont assurés par le circuit électronique de commande 34.

Des sorties de refoulement de la pompe de lave-glace 38 sont reliées aux canalisations 24.

Ainsi, lorsque le moteur M est alimenté en courant électrique, la pompe débite et les buses de projection 18 sont alimentées en liquide de lave-glace sous pression fourni par la pompe de lave-glace 38.

Par la mise en œuvre de la pompe de lave-glace 38, l'étape de projection de liquide de lavage peut débuter pendant la phase de repos, ou débuter au démarrage de la phase montante aller.

L'étape de projection va se prolonger pendant tout ou partie de la première phase montante aller du balai d'essuie-glace 14 au cours de laquelle le liquide projeté sur la surface extérieure du pare-brise 12 est immédiatement raclé et essuyé.

Par contre, notamment parce que la visibilité s'en trouve alors détériorée, il n'est pas souhaitable que l'étape de projection se prolonge, ou ait lieu, pendant tout ou partie de la phase retour descendante du balai d'essuie-glace 14.

En effet, dans un tel cas, le liquide de lave-glace est projeté « au-dessus » du balai d'essuie-glace 14 directement sur la surface extérieure du pare-brise 12 qui en est entièrement aspergé, mais ce liquide n'est pas raclé, ni essuyé par le balai d'essuie-glace qui est en phase retour descendante.

Il est ainsi souhaitable de limiter chaque étape d'aspersion ou de projection essentiellement à une ou plusieurs phases consécutives ascendantes aller, en interrompant, ou en ne déclenchant pas, de projection de liquide de lavage lorsque les balais d'essuie-glace sont en phase retour descendante de balayage.

Pour réaliser une telle mise en œuvre, l'invention propose de détecter les phases consécutives aller montantes des phases retour descendantes, et donc de détecter les inversions du sens de balayage en analysant les variations de l'accélération du balai d'essuie-glace au cours de ses mouvements en balayage alterné.

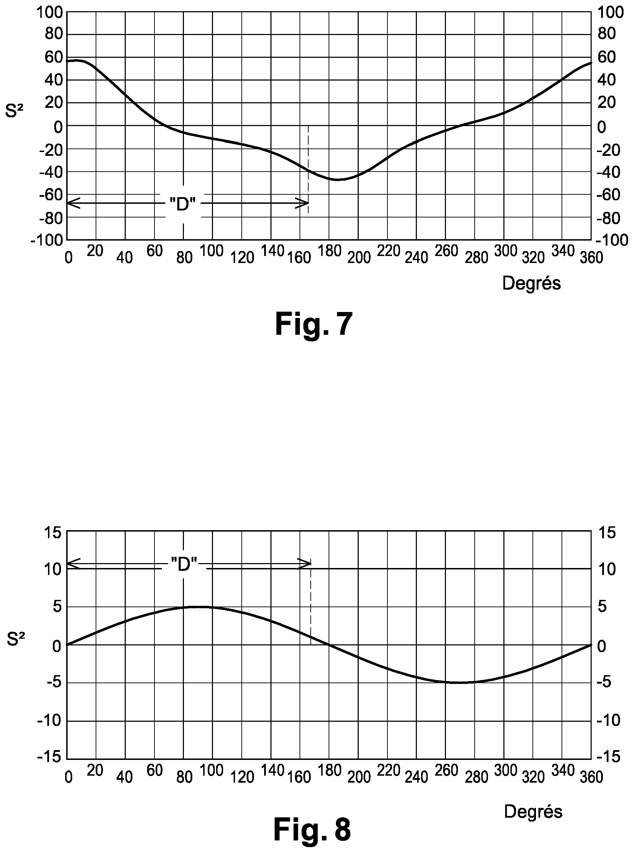

En effet, comme illustré aux schémas des figures 7 et 8, au cours d'un cycle de balayage à deux phases consécutives, la vitesse part de zéro puis augmente - par convention de valeur positive lors de la phase aller montante - puis diminue pour atteindre à nouveau zéro en position haute extrême, puis elle s'inverse pour prendre une valeur négative croissante puis à nouveau décroissante jusqu'à zéro en position basse extrême, et ainsi de suite.

Ces variations et inversions de vitesses illustrées à la figure 8 sont associées à des variations d'accélération illustrées à la figure 7.

Pour détecter ces variations, l'invention propose d'équiper au moins un essuie-glace 11 d'un capteur d'accélération CA qui fournit un signal représentatif de l'accélération instantanée de l'essuie-glace 11.

Ceci est illustré de manière schématique à la figure 4 sur laquelle on a représenté un boîtier 40 qui est fixé au balai d'essuie-glace 14 et qui loge un capteur d'accélération CA tel qu'un accéléromètre et/ou un gyroscope.

Le boîtier 40 est relié à la source d'alimentation électrique 30 et le capteur d'accélération CA est relié comme illustré schématiquement à un relais R de la commande de l'alimentation électrique du moteur M de la pompe de lave-glace 38.

Le boîtier 40 intègre ici aussi un circuit CP de pilotage de l'alimentation en courant électrique de la pompe de lave-glace 38.

Ainsi, le circuit de pilotage, qui est par exemple un microcontrôleur de type « Arduino » reçoit des signaux du capteur d'accélération CA qu'il analyse pour en déduire le sens montant ou descendant du balai d'essuie-glace 14 et donc de l'essuie-glace 11, pour commander le relais R afin que celui-ci ne provoque l'alimentation du moteur M de la pompe de lave-glace 38 que lors des phases aller montantes, et interrompe celle-ci lors des phases retour descendantes.

Ce pilotage est indépendant de l'action exercée par le conducteur sur l'organe de commande dont il dispose dans l'habitacle pour provoquer un arrosage du pare-brise, et par exemple indépendant d'une éventuelle action prolongée sur le comodo de commande.

Comme cela est schématisé aux figures 7 et 8, la durée « D » d'alimentation peut être inférieure à la durée de la phase aller montante afin d'éviter l'apparition du phénomène dit de « Water Pull Back » en garantissant que la totalité de la quantité de liquide projetée à bien été essuyée et évacuée de la surface en phase montante.

A titre de variantes, non représentées :
- le capteur d'accélération peut-être porté par le bras d'entraînement 16 ;
- chaque essuie-glace 11 peut être équipé d'un capteur d'accélération si les balayages par les deux balais ne sont pas synchronisés et nécessitent un pilotage indépendant des dispositifs d'aspersion ;
- le circuit de pilotage peut-être indépendant du capteur d'accélération et par exemple être agencé à bord du véhicule, et notamment intégré circuit électronique de commande 34 pour piloter l'alimentation électrique de la pompe de lave-glace 38, avec une liaison filaire ou radiofréquence reliant le circuit de pilotage au capteur d'accélération ;
- chaque dispositif de projection peut être de toute conception adaptée pour projeter du liquide de lave-glace sur une zone déterminée de la surface extérieure du pare-brise ;
- chaque dispositif de projection, par exemple en forme d'une buse de projection 18 peut-être porté par l'essuie-glace 11 (par le balai d'essuie-glace 14 ou par le bras d'entraînement), ou être implanté sur une partie fixe du véhicule.

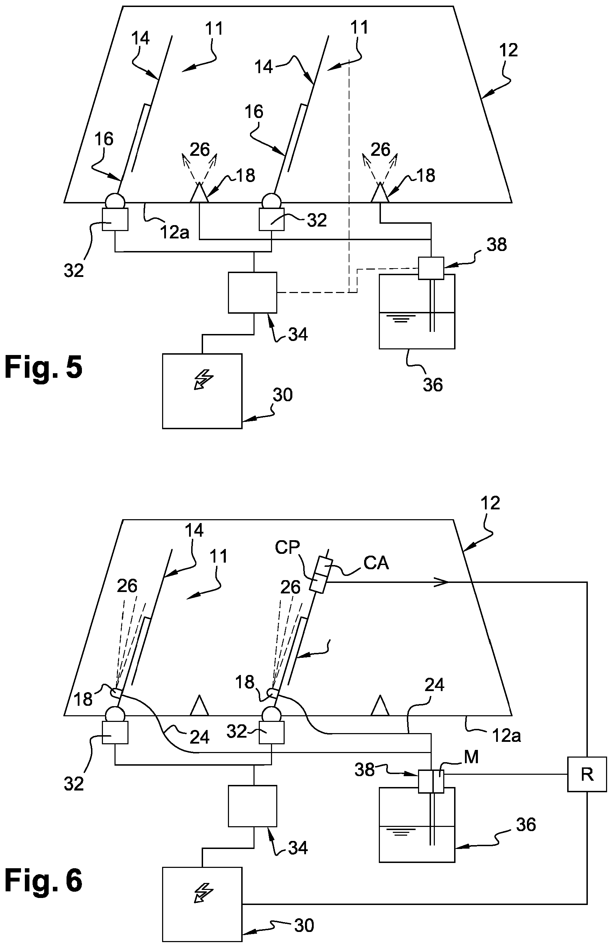

On a représenté à la figure 5 un système d'essuyage 10 analogue à celui illustré à la figure 3 dont il diffère essentiellement et de manière connue par l'implantation des buses de projection 18 sur une partie fixe du véhicule, par exemple à la base du pare-brise 12, ou sur le capot moteur.

Comme illustré schématiquement à la figure 6, il est possible de modifier la conception et l'installation d'un tel système d'essuyage pour mettre en œuvre les enseignements de l'invention faisant appel à un pilotage de la projection de liquide au moyen d'un capteur d'accélération CA et d'un circuit de pilotage CP associé.

Pour ce faire, il faut remplacer chaque balai d'essuie-glace pour équiper chaque bras d'entraînement avec un balai d'essuie-glace 14 comportant par exemple une buse 18 de projection avec une pluralité d'orifices de projection du liquide et à raccorder un tel balai d'essuie-glace 14 à la pompe de lave-glace 38, par exemple au moyen des canalisations 24 qui alimentaient préalablement les buses de projection « fixes » 18 (Figure 5) ;

Comme dans le cas du système d'essuyage illustré à la figure 4, un balai d'essuie-glace 14, ou un bras d'entraînement 16, est équipé avec un capteur d'accélération CA.

Le véhicule est aussi équipé d'un circuit CP de pilotage de l'alimentation du dispositif de projection par la pompe en fonction du sens de balayage, qui est relié au capteur d'accélération CA qui fournit au circuit de pilotage des signaux représentatifs de la valeur de l'accélération du bras d'entraînement ou du balai d'essuie-glace de l'essuie-glace lors des mouvements de balayage alterné.

Le capteur d'accélération CA et le circuit de pilotage CP peuvent aussi être intégrés dans un boîtier commun 40.

Comme précédemment, le véhicule est équipé d'un relais R de commande de l'alimentation en énergie électrique du moteur M d'entraînement de la pompe de lave-glace 38, et à relier ce relais au circuit de pilotage CP.

## Revendications

1. Système d'essuyage (10) d'une vitre (12) de véhicule comprenant :
- au moins un balai (14) d'essuie-glace apte à être entraîné par un bras (16) d'entraînement du système d'essuyage selon des mouvements de balayage alterné, d'au moins une portion de la surface extérieure d'une vitre à essuyer, entre deux positions d'inversion du sens de balayage ;
- un dispositif de projection (18) d'un liquide sur la surface extérieure ;
- une pompe d'alimentation en liquide du dispositif de projection (18) ;
- un circuit de pilotage (CP) de l'alimentation du dispositif de projection (18) par la pompe (38) en fonction du sens de balayage,
**caractérisé en ce qu'**il comporte un capteur d'accélération (CA) de l'essuie-glace qui est porté par le bras (16) d'entraînement ou par le balai (14) d'essuie-glace et qui est relié au circuit de pilotage (CP) afin de fournir au circuit de pilotage (CP) des signaux représentatifs de la valeur de l'accélération du bras (16) d'entraînement ou du balai (14) d'essuie-glace de l'essuie-glace (11) lors des mouvements de balayage alterné.

2. Système d'essuyage selon la revendication 1, **caractérisé en ce que** le circuit de pilotage (CP) comporte des moyens d'analyse des signaux fournis par le capteur d'accélération (CA) pour détecter l'inversion du sens de balayage de l'essuie-glace (11).

3. Système d'essuyage selon la revendication 1, **caractérisé en ce que** l'essuie-glace (11) comporte un balai (14) d'essuie-glace et un bras (16) d'entraînement en balayage alterné du balai (14) d'essuie-glace, et **en ce que** le capteur d'accélération (CA) est porté par le balai (14) d'essuie-glace ou par le bras (16) d'entraînement.

4. Système d'essuyage selon la revendication 3, **caractérisé en ce que** le circuit de pilotage (CP) est porté par le balai (14) d'essuie-glace ou par le bras (16) d'entraînement, et **en ce que** le dispositif de projection (18) est configuré pour asperger le pare-brise le long d'une face latérale du balai (14).

5. Système d'essuyage selon la revendication 1, **caractérisé en ce que** la pompe (38) d'alimentation est pilotée par le circuit de pilotage.

6. Système d'essuyage selon la revendication 1, **caractérisé en ce qu'**il comporte un relais (R) de commande de l'alimentation en énergie électrique d'un moteur d'entraînement de la pompe (38) d'alimentation qui est relié au circuit de pilotage (CP).

7. Essuie-glace d'une vitre de véhicule automobile, **caractérisé en ce qu'**il porte :
- un capteur d'accélération (CA) de l'essuie-glace (11);
- un circuit de pilotage (CP) de l'alimentation en liquide d'un dispositif de projection (18) de liquide sur la vitre,
et **en ce que** le capteur d'accélération (CA) est relié au circuit de pilotage.

8. Essuie-glace selon la revendication 7, **caractérisé en ce qu'**il comporte un balai (14) d'essuie-glace et un bras (16) d'entraînement en balayage alterné du balai (14) d'essuie-glace, et **en ce que** le capteur d'accélération (CA) et le circuit de pilotage (CP) sont portés par le balai (14) d'essuie-glace.

9. Essuie-glace selon la revendication 8, **caractérisé en ce que** le dispositif d'aspersion est porté par le balai (14) d'essuie-glace.

10. Balai (14) d'essuie-glace d'une vitre de véhicule automobile, **caractérisé en ce qu'**il porte :
- un capteur d'accélération (CA) de l'essuie-glace (11);
- un circuit de pilotage (CP) de l'alimentation en liquide d'un dispositif de projection (18) de liquide sur la vitre,
et **en ce que** le capteur d'accélération (CA) est relié au circuit de pilotage.

11. Balai d'essuie-glace selon la revendication 10, **caractérisé en ce que** le dispositif de projection (18) est porté par le balai (14) d'essuie-glace.

12. Procédé de modification de l'équipement d'un véhicule automobile muni d'un système d'essuyage d'une vitre du véhicule comprenant :
- au moins un bras (16) d'entraînement d'un balai (14) d'essuie-glace selon des mouvements de balayage alterné, d'au moins une portion de la surface extérieure d'une vitre du véhicule, entre deux positions d'inversion du sens de balayage ;
- un dispositif de projection (18) d'un liquide sur la surface extérieure ;
- une pompe (38) d'alimentation en liquide du dispositif de projection (18) ;
**caractérisé en ce qu'**il consiste :
-- à équiper ledit bras (16) d'entraînement avec un balai (14) d'essuie-glace comportant une pluralité d'orifices de projection du liquide et à raccorder ce balai (14) d'essuie-glace à la pompe (38) d'alimentation ;
-- à équiper le bras (16) d'entraînement ou le balai (14) d'essuie-glace avec un capteur d'accélération ;
-- à équiper le véhicule avec un circuit de pilotage (CP) de l'alimentation du dispositif de projection (18) par la pompe (38) en fonction du sens de balayage, et à relier le circuit de pilotage (CP) au capteur d'accélération qui fournit au circuit de pilotage (CP) des signaux représentatifs de la valeur de l'accélération du bras (16) d'entraînement ou du balai (14) d'essuie-glace de l'essuie-glace (11) lors des mouvements de balayage alterné.

13. Procédé d'équipement selon la revendication 12, **caractérisé en ce qu'**il consiste à équiper le véhicule avec un relais (R) de commande de l'alimentation en énergie électrique d'un moteur (M) d'entraînement de la pompe (38) d'alimentation, et à relier ce relais (R) au circuit de pilotage.

14. Procédé d'équipement selon la revendication 12, **caractérisé en ce qu'**il consiste à installer le circuit de pilotage (CP) sur le bras (16) d'entraînement ou le balai (14) d'essuie-glace.

15. Procédé selon l'une quelconque des revendications 12 à 14, **caractérisé en ce que** le circuit de pilotage (CP) est intégré à un microcontrôleur.

## Patentansprüche

1. Wischsystem (10) einer Scheibe (12) eines Fahrzeugs, das Folgendes beinhaltet:
- mindestens einen Scheibenwischerarm (14), der fähig ist, durch einen Antriebsarm (16) des Wischsystems gemäß alternierenden Wischbewegungen über mindestens einen Abschnitt der Außenfläche einer zu wischenden Scheibe zwischen zwei Umkehrstellungen der Wischrichtung angetrieben zu werden;
- eine Vorrichtung zum Spritzen (18) einer Flüssigkeit auf die Außenfläche;
- eine Pumpe zur Versorgung der Spritzvorrichtung (18) mit Flüssigkeit;
- eine Schaltung zum Steuern (CP) der Versorgung der Spritzvorrichtung (18) durch die Pumpe (38) in Abhängigkeit von der Wischrichtung,
**dadurch gekennzeichnet, dass** es Folgendes umfasst: einen Beschleunigungssensor (CA) des Scheibenwischers, der durch den Antriebsarm (16) oder durch den Scheibenwischerarm (14) aufgenommen wird und der mit der Steuerschaltung (CP) verbunden ist, um der Steuerschaltung (CP) Signale zu liefern, die für den Beschleunigungswert des Antriebsarms (16) oder des Scheibenwischerarms (14) des Scheibenwischers (11) während der alternierenden Wischbewegungen repräsentativ sind.

2. Wischsystem nach Anspruch 1, **dadurch gekennzeichnet, dass** die Steuerschaltung (CP) Mittel zur Analyse der durch den Beschleunigungssensor (CA) gelieferten Signale umfasst, um die Umkehrung der Wischrichtung des Scheibenwischers (11) zu detektieren.

3. Wischsystem nach Anspruch 1, **dadurch gekennzeichnet, dass** der Scheibenwischer (11) einen Scheibenwischerarm (14) und einen Arm (16) zum Antreiben des Scheibenwischerarms (14) durch alternierendes Wischen umfasst und dass der Beschleunigungssensor (CA) durch den Scheibenwischerarm (14) oder durch den Antriebsarm (16) aufgenommen wird.

4. Wischsystem nach Anspruch 3, **dadurch gekennzeichnet, dass** die Steuerschaltung (CP) durch den Scheibenwischerarm (14) oder durch den Antriebsarm (16) aufgenommen wird und dass die Spritzvorrichtung (18) dazu konfiguriert ist, die Windschutzscheibe entlang einer Seitenfläche des Arms (14) zu besprühen.

5. Wischsystem nach Anspruch 1, **dadurch gekennzeichnet, dass** die Versorgungspumpe (38) durch die Steuerschaltung gesteuert wird.

6. Wischsystem nach Anspruch 1, **dadurch gekennzeichnet, dass** es ein Relais (R) zum Ansteuern der elektrischen Energieversorgung eines Antriebsmotors der Versorgungspumpe (38) umfasst, das mit der Steuerschaltung (CP) verbunden ist.

7. Scheibenwischer einer Scheibe eines Kraftfahrzeugs, **dadurch gekennzeichnet, dass** er Folgendes aufnimmt:
- einen Beschleunigungssensor (CA) des Scheibenwischers (11);
- eine Schaltung zum Steuern (CP) der Versorgung einer Vorrichtung zum Spritzen (18) von Flüssigkeit auf die Scheibe mit Flüssigkeit,
und dass der Beschleunigungssensor (CA) mit der Steuerschaltung verbunden ist.

8. Scheibenwischer nach Anspruch 7, **dadurch gekennzeichnet, dass** er einen Scheibenwischerarm (14) und einen Arm (16) zum Antreiben des Scheibenwischerarms (14) durch alternierendes Wischen umfasst und dass der Beschleunigungssensor (CA) und die Steuerschaltung (CP) durch den Scheibenwischerarm (14) aufgenommen werden.

9. Scheibenwischer nach Anspruch 8, **dadurch gekennzeichnet, dass** die Sprühvorrichtung durch den Scheibenwischerarm (14) aufgenommen wird.

10. Scheibenwischerarm (14) einer Scheibe eines Kraftfahrzeugs, **dadurch gekennzeichnet, dass** er Folgendes aufnimmt:
- einen Beschleunigungssensor (CA) des Scheibenwischers (11);
- eine Schaltung zum Steuern (CP) der Versorgung einer Vorrichtung zum Spritzen (18) von Flüssigkeit auf die Scheibe mit Flüssigkeit,
und dass der Beschleunigungssensor (CA) mit der Steuerschaltung verbunden ist.

11. Scheibenwischerarm nach Anspruch 10, **dadurch gekennzeichnet, dass** die Spritzvorrichtung (18) durch den Scheibenwischerarm (14) aufgenommen wird.

12. Verfahren zur Modifizierung der Ausrüstung eines Kraftfahrzeugs, das mit einem Wischsystem einer Scheibe des Fahrzeugs versehen ist, das Folgendes beinhaltet:
- mindestens einen Arm (16) zum Antreiben eines Scheibenwischerarms (14) gemäß alternierenden Wischbewegungen über mindestens einen Abschnitt der Außenfläche einer Scheibe des Fahrzeugs zwischen zwei Umkehrstellungen der Wischrichtung;
- eine Vorrichtung zum Spritzen (18) einer Flüssigkeit auf die Außenfläche;
- eine Pumpe (38) zur Versorgung der Spritzvorrichtung (18) mit Flüssigkeit;
**dadurch gekennzeichnet, dass** es aus Folgendem besteht:
-- Ausrüsten des Antriebsarms (16) mit einem Scheibenwischerarm (14), der eine Vielzahl von Öffnungen zum Spritzen der Flüssigkeit umfasst, und Anschließen dieses Scheibenwischerarms (14) an die Versorgungspumpe (38) ;
-- Ausrüsten des Antriebsarms (16) oder des Scheibenwischerarms (14) mit einem Beschleunigungssensor;
-- Ausrüsten des Fahrzeugs mit einer Schaltung zum Steuern (CP) der Versorgung der Spritzvorrichtung (18) durch die Pumpe (38) in Abhängigkeit von der Wischrichtung und Verbinden der Steuerschaltung (CP) mit dem Beschleunigungssensor, der der Steuerschaltung (CP) Signale liefert, die für den Beschleunigungswert des Antriebsarms (16) oder des Scheibenwischerarms (14) des Scheibenwischers (11) während der alternierenden Wischbewegungen repräsentativ sind.

13. Ausrüstungsverfahren nach Anspruch 12, **dadurch gekennzeichnet, dass** es darin besteht, das Fahrzeug mit einem Relais (R) zum Ansteuern der elektrischen Energieversorgung eines Antriebsmotors (M) der Versorgungspumpe (38) auszurüsten und dieses Relais (R) mit der Steuerschaltung zu verbinden.

14. Ausrüstungsverfahren nach Anspruch 12, **dadurch gekennzeichnet, dass** es darin besteht, die Steuerschaltung (CP) an dem Antriebsarm (16) oder dem Scheibenwischerarm (14) zu installieren.

15. Verfahren nach einem der Ansprüche 12 bis 14, **dadurch gekennzeichnet, dass** die Steuerschaltung (CP) in einen Mikrocontroller integriert ist.

## Claims

1. System (10) for wiping a vehicle window (12), comprising:
- at least one windscreen wiper blade (14) adapted to be driven by a drive arm (16) of the wiper system with alternating movements sweeping at least one portion of the exterior surface of a window to be wiped between two positions at which the sweeping direction is reversed;
- a device (18) for spraying a liquid onto the exterior surface;
- a pump for feeding the sprayer device (18) with liquid;
- a circuit (CP) for controlling the feeding of the sprayer device (18) by the pump (38) as a function of the sweeping direction,
**characterized in that** it includes a sensor (CA) of acceleration of the windscreen wiper that is carried by the drive arm (16) or by the windscreen wiper blade (14) and that is connected to the control circuit (CP) in order to supply to the control circuit (CP) signals representing the value of the acceleration of the drive arm (16) or of the windscreen wiper blade (14) of the windscreen wiper (11) during the alternating sweeping movements.

2. Wiper system according to Claim 1, **characterized in that** the control circuit (CP) includes means for analysis of the signals supplied by the acceleration sensor (CA) to detect the reversing of the sweeping direction of the windscreen wiper (11).

3. Wiper system according to Claim 1, **characterized in that** the windscreen wiper (11) includes a windscreen wiper blade (14) and an arm (16) for driving the windscreen wiper blade (14) in alternating sweeping movements, and **in that** the acceleration sensor (CA) is carried by the windscreen wiper blade (14) or by the drive arm (16).

4. Wiper system according to Claim 3, **characterized in that** the control circuit (CP) is carried by the windscreen wiper blade (14) or by the drive arm (16), and **in that** the sprayer device (18) is configured to spray the windscreen along a lateral face of the wiper (14).

5. Wiper system according to Claim 1, **characterized in that** the feed pump (38) is controlled by the control circuit.

6. Wiper system according to Claim 1, **characterized in that** it includes a relay (R) for controlling the supply of electrical energy to a drive motor of the feed pump (38) connected to the control circuit (CP).

7. windscreen wiper of a motor vehicle window, **characterized in that** it carries:
- a sensor (CA) of acceleration of the windscreen wiper (11);
- a circuit (CP) for controlling the feeding of a device (18) for spraying liquid onto the window with liquid,
and **in that** the acceleration sensor (CA) is connected to the control circuit.

8. windscreen wiper according to Claim 7, **characterized in that** it includes a windscreen wiper blade (14) and an arm (16) for driving alternating sweeping movements of the windscreen wiper blade (14), and **in that** the acceleration sensor (CA) and the control circuit (CP) are carried by the windscreen wiper blade (14).

9. windscreen wiper according to Claim 8, **characterized in that** the sprayer device is carried by the windscreen wiper blade (14).

10. Motor vehicle windscreen wiper blade (14), **characterized in that** it carries:
- a sensor (CA) of acceleration of the windscreen wiper (11);
- a circuit (CP) for controlling the feeding of a device (18) for spraying liquid onto the window with liquid,
and **in that** the acceleration sensor (CA) is connected to the control circuit.

11. Windscreen wiper blade according to Claim 10, **characterized in that** the sprayer device (18) is carried by the windscreen wiper blade (14).

12. Method for modification of the equipment of a motor vehicle provided with a wiper system a window of the vehicle comprising:
- at least one arm (16) for driving a windscreen wiper blade (14) with alternating movements sweeping at least a portion of the exterior surface of a window of the vehicle between two positions at which the sweeping direction is reversed;
- a device (18) for spraying a liquid onto the exterior surface;
- a pump (38) for feeding the sprayer device (18) with liquid;
**characterized in that** it consists in:
-- equipping said drive arm (16) with a windscreen wiper blade (14) including a plurality of orifices for spraying the liquid and connecting this windscreen wiper blade (14) to the feed pump (38);
-- equipping the drive arm (16) or the windscreen wiper blade (14) with an acceleration sensor;
-- equipping the vehicle with a circuit (CP) for controlling the feeding of the sprayer device (18) by the pump (38) as a function of the sweeping direction, and connecting the control circuit (CP) to the acceleration sensor that supplies to the control circuit (CP) signals representing the value of the acceleration of the drive arm (16) or of the windscreen wiper blade (14) of the windscreen wiper (11) during the alternating sweeping movements.

13. Equipping method according to Claim 12, **characterized in that** it consists in equipping the vehicle with a relay (R) for controlling the supply of electrical energy of a drive motor (M) of the feed pump (38), and connecting this relay (R) to the control circuit.

14. Equipping method according to Claim 12, **characterized in that** it consists in installing the control circuit (CP) on the drive arm (16) or the windscreen wiper blade (14).

15. Method according to any one of Claims 12 to 14, **characterized in that** the control circuit (CP) is integrated into a microcontroller.
